# EUROPEAN PATENT SPECIFICATION

(11) **EP 2 828 169 B1**
(45) Date of publication and mention of the grant of the patent: **10.08.2016**
(21) Application number: 13724333.3
(22) Date of filing: 25.03.2013
(51) Int. Cl.: B65B 59/04, B62B 3/06, B29C 65/00, B29C 65/02, B29L 31/00, B62B 3/02, B62B 3/04, B62B 3/08, B65B 7/28

(54) **TOOL HANDLING SYSTEM**
HANDHABUNGSSYSTEM FÜR WERKZEUGE
SYSTÈME DE GESTION D'OUTIL

(30) Priority: 23.03.2012 GB 201205150
(43) Date of publication of application: 28.01.2015
(73) Proprietor: Ishida Europe Limited, Birmingham, West Midlands B32 3DB (GB)
(72) Inventor: VINE, Lee, Dorset BH16 6EL (GB)
(74) Representative: Gill Jennings & Every LLP
(86) International application number: PCT/GB2013/050768
(87) International publication number: WO 2013/140187

(56) References cited:
- DE-U1-202005 006 430
- GB-A- 191 412 755
- US-A- 2 996 025
- US-A- 3 286 986
- US-A- 5 619 913
- US-A- 5 940 953
- US-A1- 2004 266 597
- US-A1- 2009 266 028
- US-A1- 2010 218 352

## Description

### Technical Field

This invention relates to the field of handling and transporting technical tools in food packaging factories. In particular, the invention relates to the handling and transportation of sealing tools.

### Background to the invention

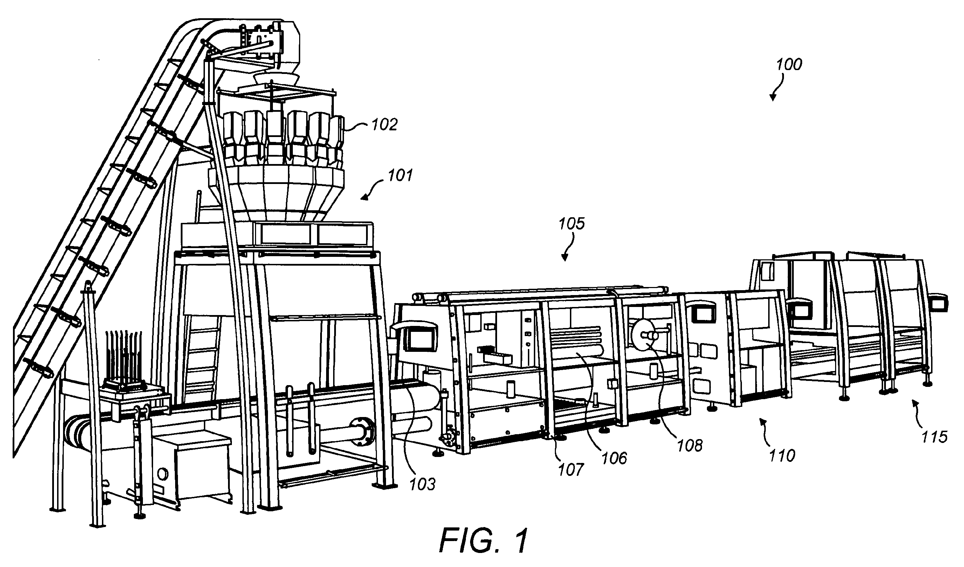

Figure 1 illustrates a typical food packaging production line, shown generally at 100. As seen in Figure 1, a typical production line will comprise a filling section 101, tray sealing machine 105, quality control unit 110 and packing system 115.

The filling section 101 comprises a computer combination weigher (CCW) 102 which can be controlled to weigh out particular batches of food product, such as chicken breast for example. The weighed batches are deposited onto conveyor 103 where they are packaged either manually or by automated robotics into containers to be sealed. The containers are typically plastic or polystyrene trays, although other sealable containers may be used.

The filled containers are transported on conveyor 103 to traysealing machine 105 which applies a lidding film to the container. The traysealing machine 105 comprises a frame 107 which houses a sealing tool shown at 106. The containers to be filled are placed by gripper arms (not shown) on to a bottom tool of the sealing tool, which rises to meet an top tool of the sealing tool, where a lidding film 108 is applied to the container. The bottom tool comprises apertures adapted to suit the particular tray being sealed at that time, and the top tool contains the sealing heads for applying the lidding film.

When the containers have been sealed, they are transferred from the sealing tool 106 back on to the conveyor 103 by the gripper arms. The containers then pass through quality control unit 110 which includes, amongst others, checkweighing, seal inspection and x-ray inspection operations, before finally being packed at packing system 115 and distributed to the desired outlet.

Different food products require different sizes of container, and since the bottom tool of the sealing tool comprises apertures adapted to a particular size of container, different size containers require different sealing tools. When a different batch of food product is to be packaged requiring a different size container, the sealing tool therefore needs to be changed for the correct one. Sealing tools also need to be periodically removed from a traysealing machine for maintenance and/or repair. However, due to the increasing throughputs of food packaging production lines, any downtime due to sealing tool changeover has a significant impact on product output and efficiency.

An example of a traditional method of changing a sealing tool is shown in Canadian patent application CA2593357A1, which discloses a moveable chassis having at least one gripper element which engages with a stopper element on the sealing tool such that the moveable chassis can remove the sealing tool from the production line and transport it away to be replaced or repaired.

However, such an approach has disadvantages. Firstly, the floors in food production factories where such production lines are situated are typically sloped in order to aid drainage. The sealing tool will, however, typically be installed horizontally, such that the plane of the tool and the plane of the floor are not parallel. This means that when a conventional apparatus is used to remove a tool, adjustable feet and/or jacks are required to level the chassis to match the level of the tool. This increases downtime and complexity. Further, there is the possibility that if the levelling is not carried out correctly, delicate traysealing machine internals or the sealing tool itself may be damaged when the sealing tool is removed.

Secondly, the device seen in CA2593357A1 removes the sealing tool as a whole. As described hereinabove, a sealing tool comprises both upper and lower tool halves. When maintenance work is to be carried out, these tool halves need again increases the time taken to repair a sealing tool, reducing efficiency. There is also the issue of aligning the secondary device with the chassis due to the sloping floor, increasing the chance of tool damage.

It is known in the art to remove the top tool from the traysealing machine separately from the bottom tool. However, this undesirably increases handling time.

There is therefore the requirement for a system that increases the speed and ease with which sealing tools can be changed or removed for maintenance/repair.

Other examples of apparatus and systems relating to the handling and transporting technical tools may be found in US 3286986 A, DE 202005006430 U1, and US 2009/266028 A1.

### Summary of the invention

In accordance with the present invention there is provided a system as defined by claim 1.

The maintenance position providing clearance between the sealing tool and the top of the traysealing machine advantageously means that the sealing tool can be removed from the traysealing machine more quickly and easily and with less risk of damaging delicate components of either the traysealing machine or the sealing tool itself. Similarly, replacing a sealing tool into the traysealing machine is made simpler, with the machine and tool components less prone to damage.

The platform may further comprise a plurality of rollers adapted to support the sealing tool, such that when the platform is in the sealing position, the sealing tool is moveable on the rollers so as to provide partial clearance between the sealing tool and the top of the traysealing machine. Other means of supporting the sealing tool such that when the platform is in the sealing position, the sealing tool is easily moveable (typically by the supporting means providing low friction movement of the sealing tool) so as to provide partial clearance between the sealing tool and the top of the traysealing machine are envisaged. For example, an air bed or at least one rail may be adapted to support the sealing tool in such a manner.

Therefore, the system according to the present invention may provide a two-stage process for positioning a sealing tool in a suitable position such that it can be removed from a traysealing tool quickly and easily. In the first stage, the tool is moved on the rollers (or other support) so as to provide partial clearance between the sealing tool and the top of the traysealing machine. "Partial clearance" means that although the sealing tool is not fully clear of the machine internal features, there is still a large enough portion of the sealing tool exposed from the traysealing machine such that it can be removed. The sealing tool may be removed at the first stage if a quick change of tool is required, or the sealing tool is small and therefore unlikely to damage the traysealing machine internal features, for example.

Preferably however, the second stage of the two-stage process is employed, wherein the platform is moved from the sealing position to the maintenance position providing clearance between the sealing tool and the top of the traysealing machine. Here, "clearance" ensures that the sealing tool is clear of the machine internal features. This means that the sealing tool is able to be lifted in a direction normal to the traysealing machine, or a direction normal to the floor, without damaging the tool itself of the traysealing machine. The additional clearance at the second stage also means that the sealing tool can be removed and replaced more quickly and easily, reducing downtime of the food packaging apparatus.

The platform may be coupled to at least one retractable rail slideably mounted to the frame, wherein the at least one retractable rail is operable to move the platform between the sealing and maintenance positions, thereby providing substantially full clearance between the sealing tool and the top of the traysealing machine when the platform is in the maintenance position. Here, "substantially full clearance" ensures that the sealing tool is clear of any machine internal features and preferably the frame as well.

Typically, the at least one retractable rail comprises an elongate groove and is mounted to the frame via at least one bearing coupled to said elongate groove. Preferably two laterally spaced retractable rails are provided for increased support of the platform. Retractable rails provide a reliable and mechanically simple means of moving the platform between the sealing position and the maintenance position; however other means of slideably mounting the platform to the frame are envisaged, such as a hydraulic or pneumatic system, a chain or belt driven by an electrical motor, or a system of tilting gravity rollers.

The platform may comprise two parallel, laterally spaced elongate members adapted to support the base of the sealing tool. This advantageously provides good support for a sealing tool, whilst at the same time providing ease of access to the base of the sealing tool. This means that removing and replacing sealing tools in such a traysealing machine can be carried out with increased ease and efficiency.

The integrated nature of the trolley and the support table of the tool handling system allows for efficient handling of sealing tools. For example, when a sealing tool is to be removed from a traysealing machine, the height adjustment member is moved from the first position to the second position, thus engaging the support table to the trolley. This means that the support table can be manoeuvred by the trolley. A sealing tool can then be loaded on to the support table from a traysealing machine, and subsequently transported to the desired location.

Once there, the height adjustment member can move from the second position to the first position, thereby disengaging the support table from the trolley. Through the use of multiple tables, the trolley can handle multiple different sealing tools, both for transportation and loading to and from traysealing machine(s).

Preferably, the vertical height adjustment member comprises a second attachment member complimentary to said first attachment member.

In one example, the support table comprises two parallel, laterally spaced elongate support members arranged to support the base of the bottom tool of the sealing tool. In a further example, if the traysealing machine comprises rails as in the above-described examples of the first comparative example, the support table may comprise corresponding rails operable to engage with the rails of the traysealing machine, thereby ensuring simple removal and replacement of a sealing tool onto the traysealing machine.

Typically, the second attachment member is at least one peg, and the first attachment member is at least one complementary hook. This advantageously provides a mechanically simple and resilient means of attaching the support table to the trolley. When the support table is in the attachment position, the at least one hook is aligned with, and vertically spaced from, the at least one peg. Therefore, when the height adjustment member is raised vertically from the first position to the second position, the at least one peg is raised and engages with its corresponding hook.

Typically, the support table comprises four hooks and the trolley comprises four complimentary pegs to provide a stronger attachment between the trolley and the table. Alternatively, the at least one hook may be disposed on the trolley and the at least one peg is disposed on the support table. Other attachment members are also envisaged, such as electromagnets for example, or pneumatic or hydraulically operated clamps

The trolley may further comprise a top tool turnover unit coupled to the height adjustment member, wherein the top tool turnover unit comprises a third attachment member operable to engage with a top tool of sealing tool, and the height adjustment member is operable to move between a third position and a fourth position, wherein when the height adjustment member is in the third position, the third attachment means engages with the top tool of a sealing tool, and wherein when the height adjustment member is in the fourth position, the top tool is vertically spaced from the bottom tool of the sealing tool and the first attachment member is not engaged with the second attachment member.

Here, the fourth position is vertically above the third position, such that when the height adjustment member moves from the third position to the fourth position, the top tool is lifted up and separated from the bottom tool of the sealing tool. However, in the fourth position the first attachment member is not engaged with the second attachment member. This advantageously means that when the top tool is vertically spaced from the bottom tool, the trolley can be manoeuvred clear from the support table. This provides substantial clearance beneath the turnover unit holding the top tool, allowing for ease of maintenance and inspection of the top tool. The substantial clearance beneath the turnover unit also allows advantageously the top tool to be rotated about any axis.

Preferably, the top tool turnover unit comprises an axle such that said turnover unit is operable to rotate about an axis perpendicular to that of the height adjustment member. Such rotation utilises the substantial clearance beneath the turnover unit, allowing for more efficient inspection and maintenance of the top tool.

Typically, the third attachment member is at least one elongate groove operable to receive an attachment feature of a top tool of a sealing tool. Preferably, the at least one elongate groove is in a plane substantially perpendicular to that of the height adjustment member. However, other attachment members are envisaged, for example electromagnets, pneumatically or hydraulically operated clamps, or a male protrusion on the top tool turnover unit which mates with a suitably adapted female socket on the top tool.

In one example, the first position and the fourth position are the same position. Further, the height adjustment member may be operable to provide indexed or continuous motion.

The height adjustment means is typically slideably mounted to a substantially vertical mast member. Preferably, the height adjustment means is operated by a ball screw and an electric motor. However, other systems are envisaged, such as hydraulic or electro-hydraulic systems, pneumatic systems, or manually operated systems.

Preferably, the trolley comprises wheels for ease of manoeuvrability. However, other means of moving the trolley are envisaged, such as caterpillar tracks or rollers.

In accordance with a first aspect of the present invention there is provided a system comprising the traysealing machine described hereinabove and the tool handling system hereinabove, wherein the support table is arranged to cooperate with the traysealing machine such that, in use, when the platform is in the maintenance position, the sealing tool is transferred from the traysealing machine to the support table by movement of the vertical height adjustment member from the first position to the second position such that the support table is raised off of the floor, lifting the sealing tool off of the platform and on to the support table.

However, as described above, the sealing tool may be transferred from the traysealing machine to the support table when the platform is in the sealing position, and the sealing tool has been moved on rollers (or other means such as an air bed or rail for example) so as to provide partial clearance between the sealing tool and the top of the traysealing machine.

The present invention therefore allows a sealing tool to be easily removed from a traysealing machine, and transported and handled as desired. Particularly advantageously, transferring the sealing tool from the traysealing machine to the support table when the platform of the traysealing machine is in the maintenance position allows the sealing tool to be lifted in a direction normal to the floor. This is because with the platform in the maintenance position, the sealing tool is clear from delicate traysealing machine internals that could be damaged by the lifting process. This is particularly advantageous in food packaging factories as the floors are generally sloped to aid drainage. The present invention therefore eliminates the need for complicated levelling apparatus to handle sealing tools from traysealing machines, thereby increasing the efficiency of the process and reducing production line downtime.

### Brief description of the drawings

Embodiments of the present invention will now be described and contrasted with the prior art with reference to the accompanying drawings in which:
Figure 1 shows a view of a food packaging production line;
Figure 2 shows a perspective cutaway view of a traysealing machine according to a first aspect of the invention;
Figure 3 shows a front view of a traysealing machine according to a first aspect of the invention
Figure 4 shows a cutaway view of a traysealing machine according to a first aspect of the invention;
Figure 5 shows a perspective view of a tool handling system according to a first aspect of the invention;
Figure 6 shows a side view of a tool handling system according to a first aspect of the present invention;
Figure 7 shows a side view of a tool handling system according to a first aspect of the invention;
Figure 8 shows a further side view of a tool handling system according to a first aspect of the invention;
Figure 9 shows a perspective view of a support table according to the first aspect of the invention, supporting a sealing tool;
Figure 10 shows a side view of a tool handling system according to a first aspect of the invention;
Figure 11 shows a further side view of a tool handling system according to a first aspect of the invention;
Figure 12 shows a perspective view of a tool handling system according to a first aspect of the invention;
Figure 13 shows a perspective view of a trolley according to the first aspect of the invention supporting the top tool of a sealing tool; and
Figure 14 shows a further perspective view of a trolley according to the first aspect of the invention supporting the top tool of a sealing tool.

### Detailed description of the drawings

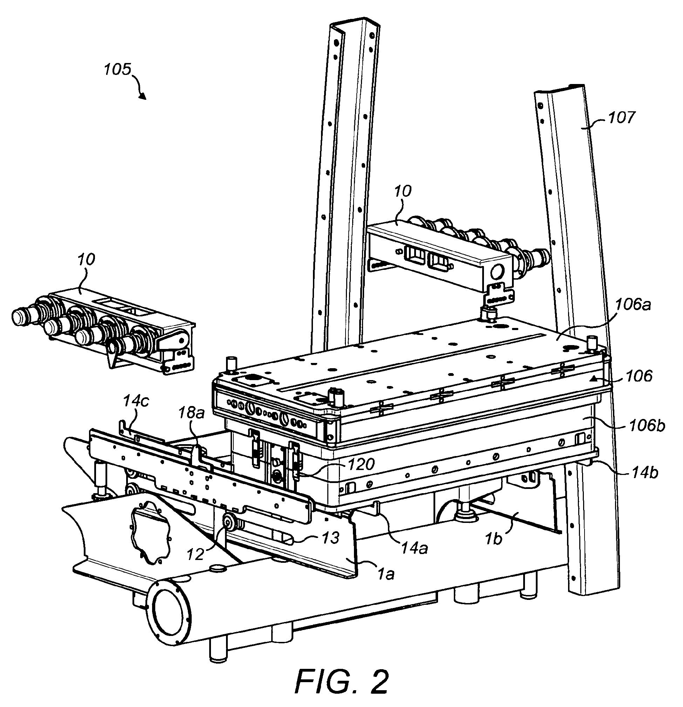

Figure 2 depicts a perspective cutaway view of traysealing machine 105. The traysealing machine 105 comprises a frame 107 that houses sealing tool 106 and service unit 10 amongst other machine internals. The sealing tool 106, as described hereinabove, comprises a bottom tool 106b and a top tool 106a. The bottom and top tools are coupled together via latches 120.

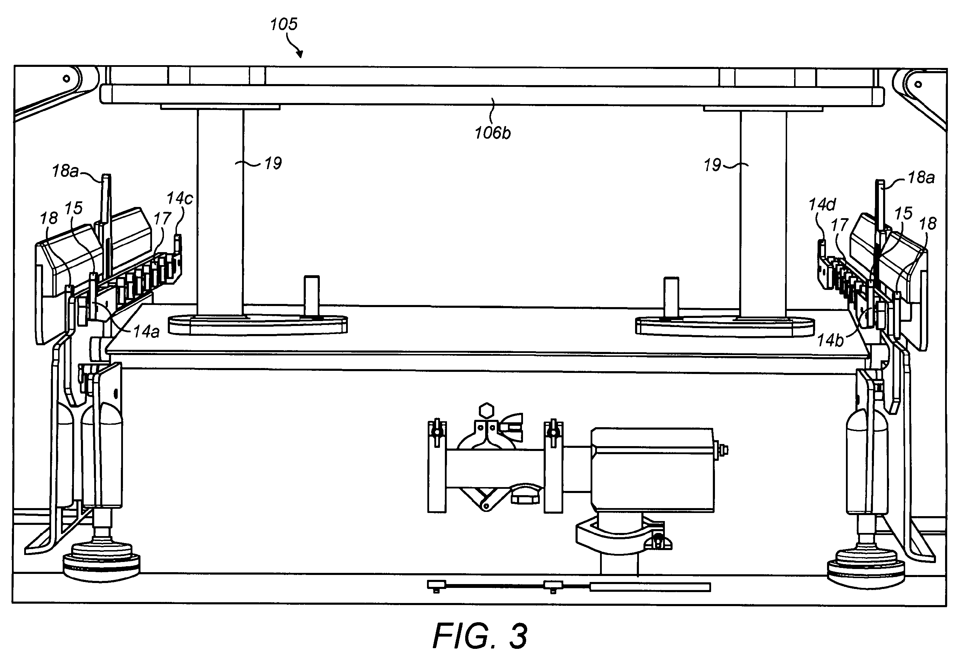

Figure 3 shows a front view of the traysealing machine 105 with the sealing tool in a raised position. Figure 3 shows platform members 14a and 14b adapted to support the sealing tool 106 (see Figures 2 and 3). In the raised position as seen in Figure 3, the sealing tool 106 is operable to seal trays with a lidding film. When the tool is lowered on pillars 19, it is supported by a plurality of rollers 17. The plurality of rollers 17 are arranged in two parallel, laterally spaced lines at a pitch so as to support both ends of the tool, as seen in Figure 3.

When the sealing tool 106 is to be removed from the traysealing machine 105, the tool 106 is lowered onto the rollers 17 and automatically disengaged from the traysealing machine. Due to the low friction provided by the rollers, the tool is then be moved on to platform members 14a and 14b, which similarly to the rollers are parallel and laterally spaced so as to support either end of the tool 106. Protruding stop elements 15 engage the sealing tool in a stationary position.

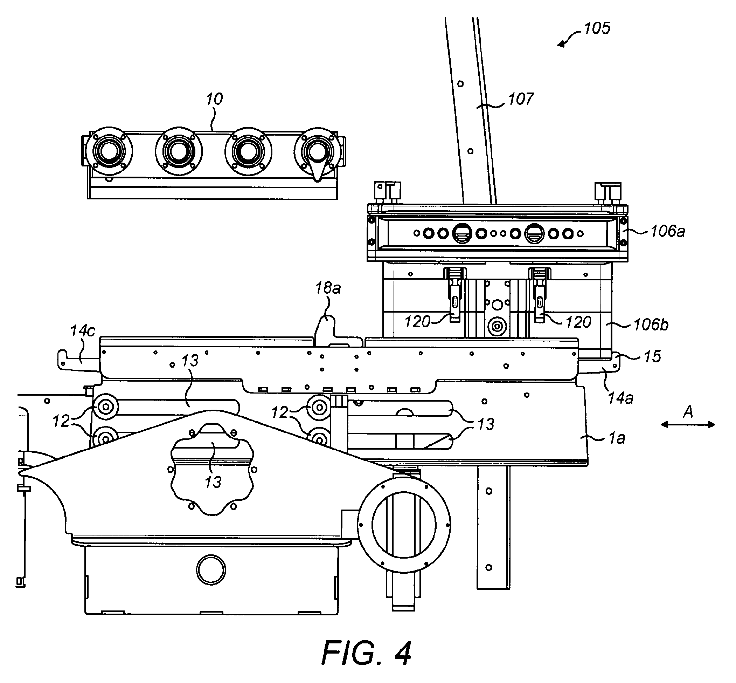

As seen in Figures 2 and 4, the sealing tool 106 is supported on the platform members 14a, 14b which are positioned beneath the bottom tool 106b. The platform members 14a, 14b are in turn coupled to sliding rails 1 a and 1 b respectively, as seen in Figure 2. As more clearly seen in Figure 4, the sliding rails 1 a, 1 b comprise four elongate grooves 13 which cooperate with bearings 12 in a fixed position on the frame 107. Each groove 13 cooperates with one bearing 12, although it is envisaged that other combinations may be used.

Cooperation of the grooves 13 and bearings 12 allows the rails 1 a, 1 b to slide relative to the frame 107. The direction of this movement is illustrated by double-ended arrow A in Figure 4. As platform members 14a, 14b are attached to the rails 1 a, 1 b respectively, this allows the sealing tool 106 to retractably move relative to the frame 107.

In both Figures 2 and 4, the sealing tool is shown with rails 1 a, 1 b laterally extended in a maintenance position laterally spaced from the service unit 10 and other traysealing machine internal features. This ensures that there is clearance above the top tool 106a, which advantageously allows easy removal of the sealing tool 106 from the platform members 14a, 14b, as will be described below.

Even so, it is possible to remove the sealing tool 106 without moving the rails, and just moving the sealing tool on the rollers to engage with the stop elements 15. However, use of the "secondary stage" sliding of the rails further increases the ease with which the sealing tool 106 is removed from the traysealing machine, as this provides greater clearance above the top tool 106a.

Catch elements 18 (seen in Figure 3) are operable to stop the rails 1a, 1b in the desired maintenance position. This maintenance position can be adjusted as desired.

Also shown in Figure 3 are platform members 14c and 14d which are mounted in the same manner as the above-described platform members 14a and 14b, but are slideable in the opposite direction (into the plane of the paper in the view of Figure 3). This allows the sealing tool 106 to be removed from the opposite side of the traysealing machine 105. This is particularly advantageous as this feature allows the present invention to be utilised in a dual-lane traysealing apparatus, where two lines of trays may be sealed simultaneously. Removal of the sealing tool from either side of the traysealing machine 105 also advantageously increases its flexibility of use.

Stop members 18a are situated in the centre of the lines of rollers 17, and comprise an offset protrusion which is operable to direct the sealing tool 106 on the rollers to either support members 14a and 14b; or 14c and 14d. In the arrangement of Figure 3, the offset protrusion is operable to guide the sealing tool towards support members 14a and 14b, as described above. If said offset protrusion was reversed, the sealing tool 106 would be directed towards support members 14c and 14d.

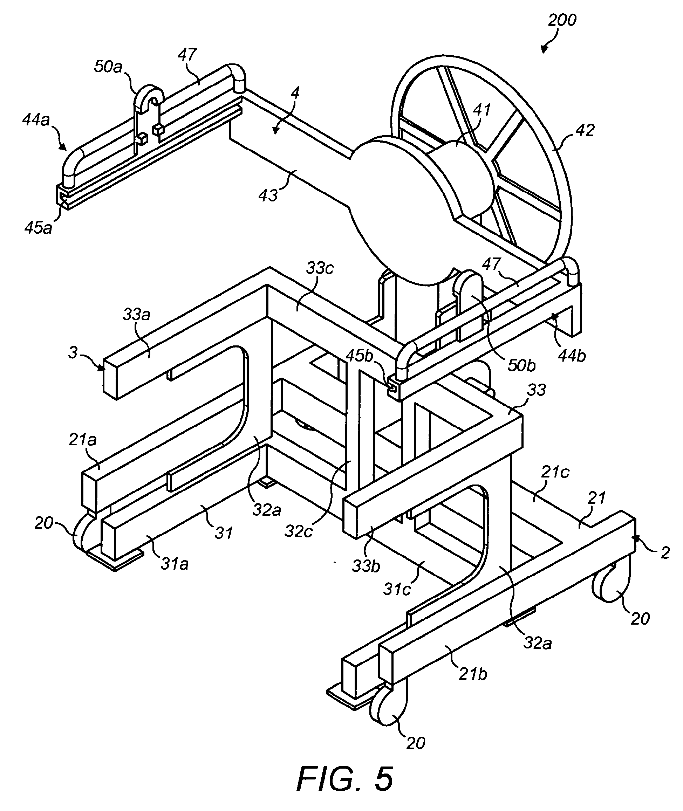

Figure 5 is a perspective view of a tool handling system 200 according to one embodiment of the present invention. The tool handling system 200 comprises a trolley 2 and a tool table (support table) 3. A top tool turnover unit 4 is attached to the trolley 2.

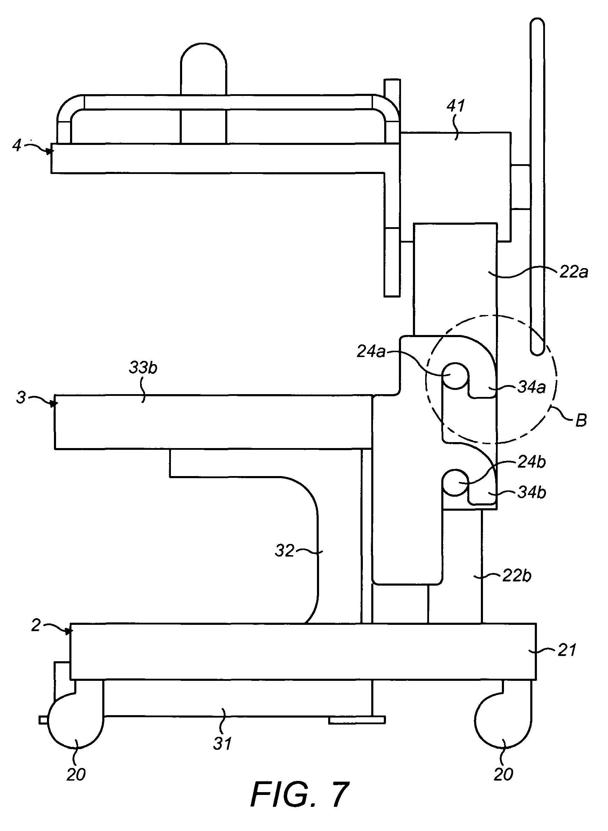

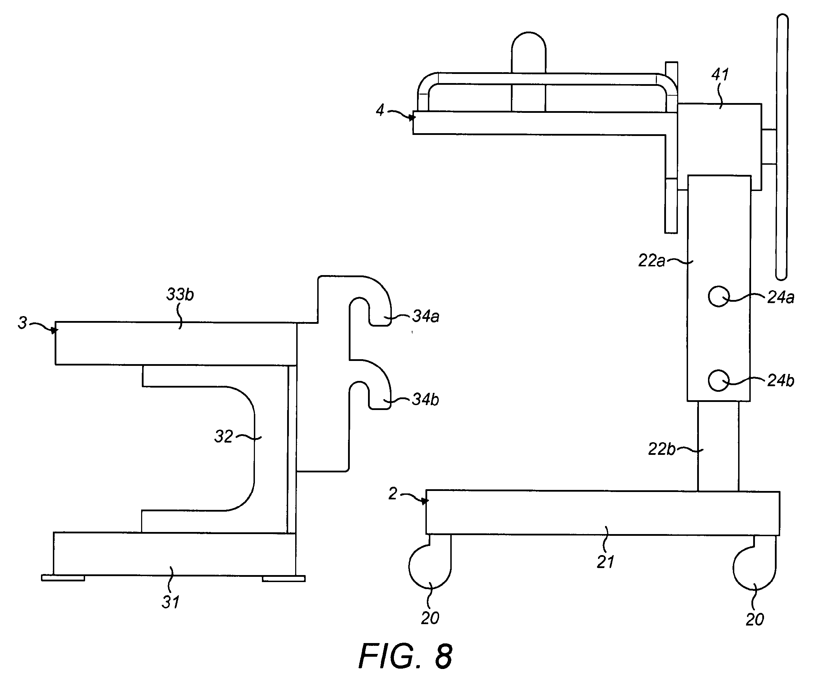

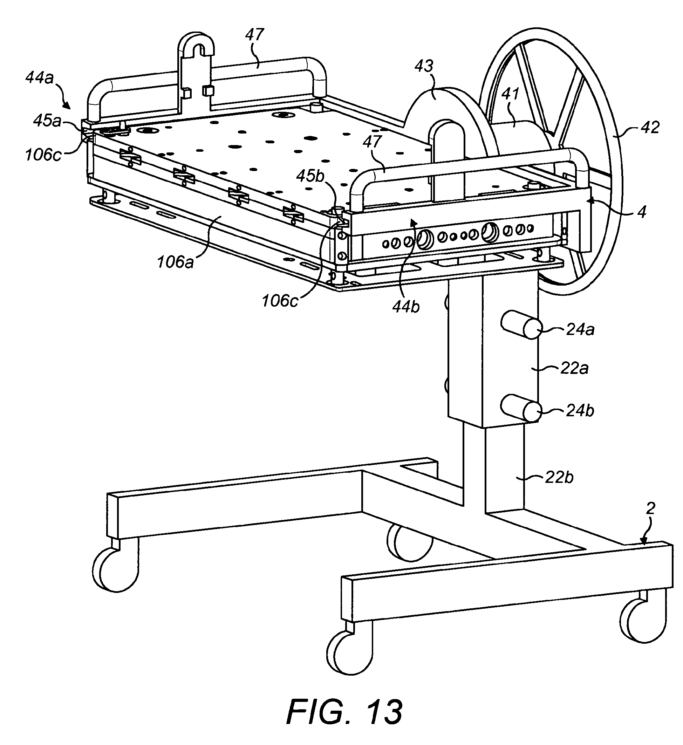

Trolley 2 comprises a chassis 21 defining a substantially "C" shape with two laterally spaced parallel protruding members 21 a, 21 b attached with crossbeam 21 c. Each protruding member 21 a, 21 b has two wheels 20 attached. The wheels are mounted in casters allowing 360° rotatability of the wheels and thus easy manoeuvrability of the trolley. As more clearly seen in Figures 7 and 8, a substantially vertical mast member 22b is attached in the centre of crossbeam 21 c. A height adjustment member 22a comprises pegs 24a and 24b which protrude perpendicular to the height adjustment member and parallel to cross member 21 c. (i.e. into the plane of the page in the view of Figures 7 and 8). There are corresponding pegs on the opposite side of the height adjustment member, as seen in Figure 13.

The height adjustment member 22a is slideably attached to the mast member 22b and therefore allows the vertical position of pegs 24a, 24b and turnover unit 4 to be adjusted. Turnover unit 4 is attached to the height adjustment member 22a via an axle 41.

Tool table 3 comprises a chassis 31 and a support structure 33. Chassis 31 comprises two laterally spaced parallel protruding members 31 a, 31 b connected with crossbeam 31 c so as to define a substantially "C" shape. Similarly, support structure 33 comprises two substantially parallel support members 33a, 33b connected by crossbeam 33c so as to define a "C" shape. The chassis 31 and support structure 33 are of substantially the same size and connected via supports 32a, 32b and 32c. As seen in Figure 5, the chassis of the tool table 3 and the chassis of the trolley 2 are complimentary such that the tool table 3 cooperates with the trolley 2. The protruding members 21 a and 21 b of the trolley 2 are laterally further spaced apart than the protruding members 31 a and 31 b of the tool table.

As seen in Figures 5, 6 and 7, the tool table 3 comprises hooks 34a and 34b, which are complimentary to the pegs 24a and 24b on height adjustment member 22a of the trolley 2. The hooks 34a and 34b are aligned with each other and vertically spaced. The orientation of the hooks is parallel to the protruding members of the table and perpendicular to the crossmembers. Engagement of the hooks and pegs attaches the tool table 3 to the trolley 2, as illustrated at "B" in Figure 7. The tool table 3 in fact comprises four hooks corresponding to the four pegs of the trolley 2. However, only two hooks are visible in the drawings.

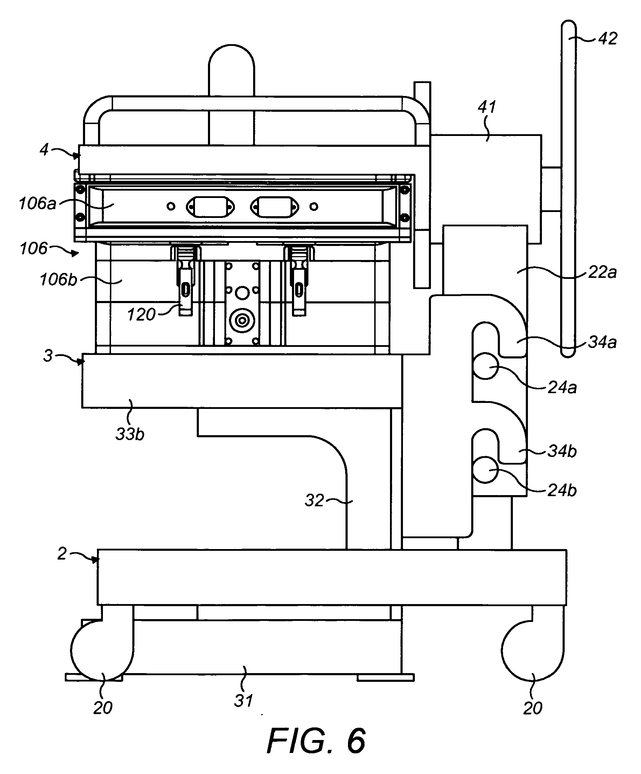

In order to attach the tool table 3 to the trolley 2, height adjustment member 22a is lowered to a first predetermined position such that when the trolley 2 is positioned adjacent the tool table 3 as shown in Figure 5, the pegs are aligned with and vertically spaced from the hooks, and the top tool turnover unit 4 is vertically spaced from the top tool 106a of the sealing tool 106. This first predetermined position of the height adjustment member 22a is shown in Figure 6. When the trolley 2 is positioned so as to receive the tool table 3 in a so-called "attachment position", height adjustment member 22a is raised to a second predetermined position such that the pegs 24a, 24b engage with hooks 34a and 34b respectively, as seen in Figure 7. In this second predetermined position, the height adjustment member 22a is raised to a position such that the chassis 31 of the tool table is spaced from the floor, as seen in Figure 7, in order that the tool table 2 is able to be manoeuvred by the trolley 2.

The use of the tool handling system to remove a sealing tool 106 from the traysealing machine will now be described. Firstly, the tool table 3 is attached to the trolley 2 as described above. As previously described with reference to Figures 2, 3 and 4, the sealing tool 106 is firstly lowered on to the rollers. For additional clearance of the traysealing machine 105, the rails 1 a and 1 b on the traysealing machine 105 are then slideably moved such that the sealing tool 106 is in the maintenance position with additional clearance above the top tool 106a. The tool handling system 200 is then manoeuvred to the traysealing machine until the support members 33a and 33b of the tool table 3 cooperate with the traysealing machine.

The platform members 14a and 14b of the traysealing machine are laterally spaced to allow easy access to the base of the bottom tool 106b of the sealing tool 106. This means that support members 33a and 33b of the tool table 3 can be positioned beneath the bottom tool 106b of the sealing tool. The support members 33a and 33b have a different lateral spacing to that of platform members 14a and 14b to allow this to occur. When the tool handling system 200 is fully cooperated with the traysealing machine 105 (such that support members 33a and 33b are positioned beneath the bottom tool), the height adjustment member 22a is raised such that the sealing tool 106 is lifted off platform members 14a, 14b and on to support members 33a and 33b of tool table 3. The tool handling system 200 is then manoeuvred away from the traysealing machine.

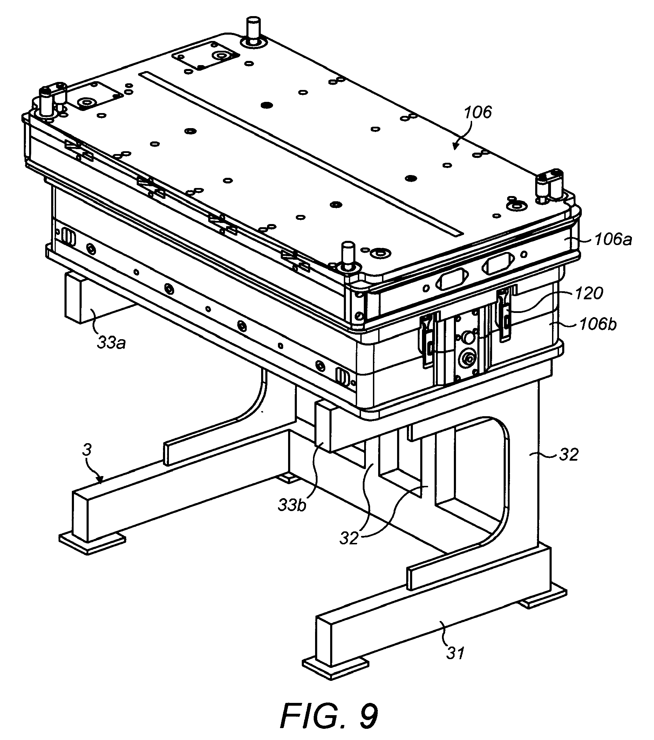

As seen in Figure 9, the tool table 2 is detachable from trolley 3 for ease of storage of the sealing tool 106. The tool table is released by lowering the height adjustment member 22a to the first predetermined position, thereby disengaging the hooks 34a, 34b from the pegs 24a, 24b. Through the use of multiple tool tables 3, a single trolley 3 can be used to handle multiple sealing tools, for both transportation and loading to and from traysealing machine(s) 5.

If a replacement sealing tool 106 is to be installed into the traysealing machine 105 (for example if a different size container is to be sealed), the trolley 2 engages the tool table 3 supporting the desired tool using the hook and peg system as described above, and the tool handling system 200 is manoeuvred to cooperate with the traysealing machine 105. The height adjustment member 22a is then lowered such that the sealing tool is supported by platform members 14a, 14b, and the tool handling system is removed.

As described hereinabove, the floor of a food packaging factory is typically sloped to aid drainage, meaning that the sealing tool and factory floor are not parallel. Advantageously, due to the sealing tool 106 being moved to the maintenance position within the traysealing machine 105, the tool handling system is able to lift the tool in a direction normal to the factory floor, as there is adequate clearance above the top tool 106a such that the tool does not collide with any components of the traysealing machine. This means that the tool handling system does not have to be levelled to match the level of the sealing tool, increasing the speed with which sealing tools can be removed and replaced, and therefore minimising downtime. Additionally, due to the integrated nature of the tool table 3 and trolley 2, tools are easily manoeuvred to be stored or used without having to level two different apparatuses. These advantages of the present invention reduce downtime of the food packaging system, and reduce the chance of damage to the sealing tool or traysealing machine.

As described hereinabove, the tool handling system 200 comprises top tool turnover unit (hereinafter referred to as "turnover unit") 4. As clearly seen in Figure 5, turnover unit comprises axle 41 driven by wheel 42 and which in turn rotates elongate turnover member 43. Axle 41 is attached to the upper end of height adjustment unit 22a such that the height of the turnover unit can be adjusted. At either end of turnover member 43 are attachment units shown at 44a and 44b. Attachment units 44a and 44b are parallel to one another and laterally spaced, thus forming a substantially "C" shape with turnover member 43. Attachment unit 44a comprises elongate groove 45a running along its length, and rail 47. Similarly, attachment unit 44b comprises elongate groove 45b facing groove 45a, and rail 47. As will be described below, turnover unit 4 is used to provide ease of access to the top tool 106a of sealing tool 106, for maintenance and the like.

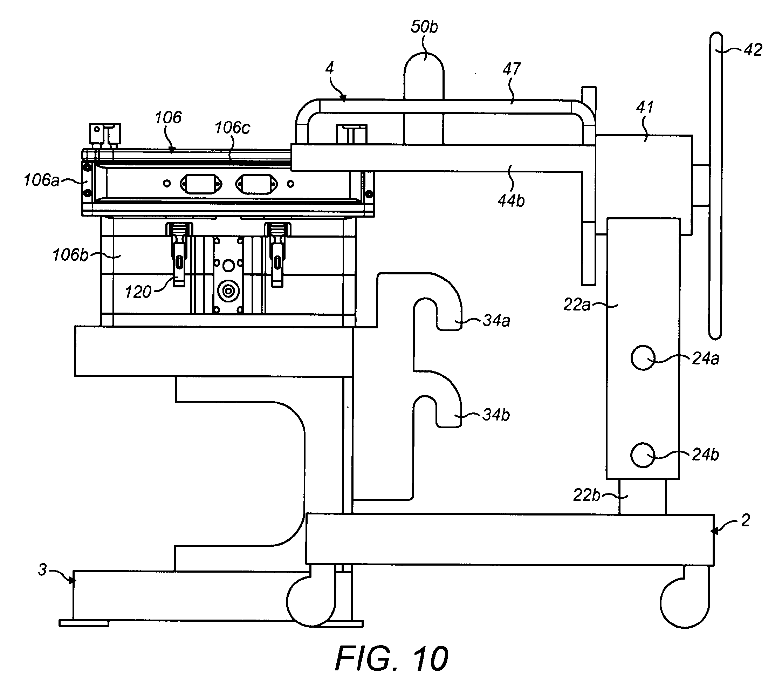

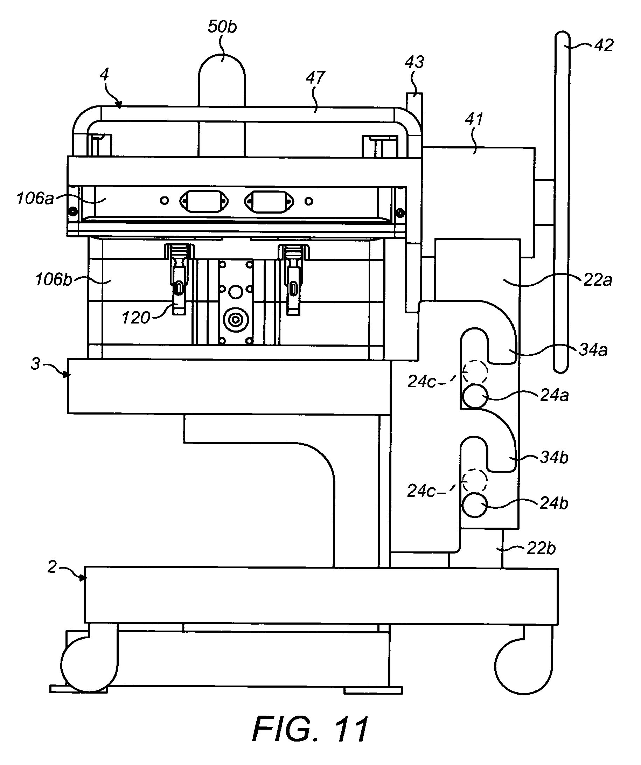

Figure 10 shows a sealing tool 106 positioned upon tool table 3 adjacent trolley 2. When access to the top tool 106a is required, height adjustment member 22a is lowered to a third predetermined position such that grooves 45a and 45b are at the same height as elongate protrusions 106c on top tool 106a. This third predetermined position is lower than the first predetermined postion, as can be seen by comparison of Figures 6 and 11. The grooves 45a and 45b are laterally spaced to match the width of the top tool 106a such that elongate protrusions 106c engage with the grooves 45a, 45b when the trolley 2 is moved towards tool table 3 (see Figure 11). The lateral spacing of the attachment units 44a and 44b can be altered depending on the size of the sealing tool to be handled.

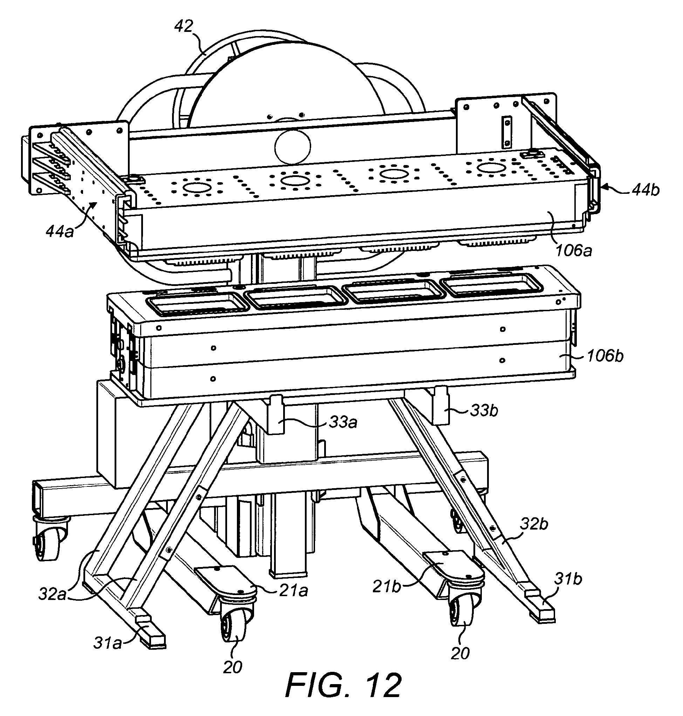

As seen in Figure 11, when the trolley 2 has been manoeuvred such that the top tool 106a of the sealing tool 106 is engaged with attachment units 44a and 44b, hooks 34a and 34b of the tool table 2 are aligned with and laterally spaced from pegs 24a and 24b on height adjustment unit 22a. The latches 120 on the sealing tool 106 are then released and the height adjustment member 22a is raised from the third predetermined position to a fourth predetermined position (24c) such that the top tool 106a is lifted clear of the bottom tool but the pegs 24a and 24b are not engaged with hooks 34a and 34b. This position is illustrated in Figure 12. Figure 12 also illustrates alternative geometries for support table 3 and trolley 2. The trolley 2 can then be moved clear of the tool table 3 and the bottom tool 106b, as seen in Figure 13.

The first predetermined position and the fourth predetermined position are in one embodiment the same position.

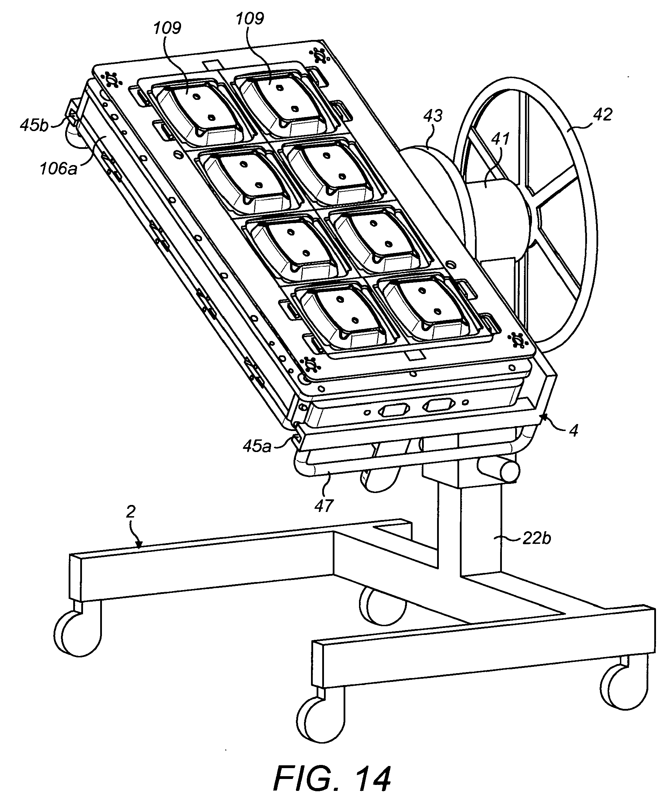

Wheel 42 can then be used to rotate turnover member via axle 42 in order to rotate top tool 106a. This advantageously allows ease of access to the top tool 106a for maintenance due to the additional clearance beneath the turnover unit 4. For example, Figure 14 shows the top tool being rotated so as to reveal seal heads 109. The rotation of the turnover member 43 can be carried out manually or by automation. Rails 47 on attachment units allow manual rotation of the top tool 106a. Advantageously, the large amount of clearance underneath the top tool turnover unit 4 once the support table has been removed allows the top tool 106a to be rotated lengthways about an axis on the tool's width. The turnover unit 4 is operable to rotate the top tool 106a about any of its axes.

In one embodiment, attachment features 50a and 50b allow the bottom tool 106b of a sealing tool 106 to be attached to the top tool turnover unit 4 and rotated In a similar manner to the top tool 106a.

The tool handling system 200 of the present invention therefore advantageously allows a sealing tool 106 to be easily removed from a traysealing machine 5, whilst allowing ease of separation of the upper and lower tool halves for maintenance.

The height adjustment unit 22a is raised and lowered on mast member 22b using a ball-screw and electric motor with a brake unit. The motor is powered from an on-board rechargeable power pack, allowing the trolley to move safely and freely within the production area. However, other systems are envisaged, such as hydraulic, electro-hydraulic, pneumatic and hand-operated systems.

The operation of the tool handling system and traysealing machine may be performed manually or automatically. The invention is also suitable for use in a dual-lane traysealing apparatus.

The invention is designed with quick and easy changeovers in mind. Operators can easily change sealing tools using automatic and quick release features (for example the latches on the sealing tool may be quick release). The invention is particularly efficient for ready meal applications where the customer's product range and production volumes fluctuate.

## Claims

1. A system comprising a tool handling system (200) for transporting a sealing tool (106), the tool handling system (200) comprising:
a trolley (2) comprising a vertical height adjustment member (22a) operable to move between a first position and a second position; and
a support table (3) for supporting a sealing tool (106), said support table (3) comprising a first attachment member (34a, 34b) complimentary to said vertical height adjustment member (22a),
wherein the trolley (2) is arranged to receive the support table (3) in an attachment position that aligns the first attachment member (34a, 34b) with the vertical height adjustment member (22a), such that when the vertical height adjustment member (22a) is moved from the first position to the second position, the first attachment member engages (34a, 34b) with the vertical height adjustment member (22a) and the support table (3) attaches to the trolley and, in use, is raised off of the floor, and
a traysealing machine (105), the traysealing machine (105) comprising:
a frame (107) and a platform (14a, 14b) arranged to support a sealing tool (106), wherein the platform (14a, 14b) is mounted to the frame (107) such that said platform (14a, 14b) is moveable relative to the frame (107) between a sealing position where the sealing tool (106) is operable to seal containers, and a maintenance position providing clearance between the sealing tool (106) and the top of the traysealing machine (105),
wherein the support table (3) is arranged to cooperate with the traysealing machine (105) such that, in use, when the platform (14a, 14b) is in the maintenance position, the sealing tool (106) can be transferred from the traysealing machine (105) to the support table (3) by movement of the vertical height adjustment member (22a) from the first position to the second position such that the support table (3) is raised off of the floor, lifting the sealing tool (106) off of the platform (14a, 14b) and on to the support table (3).

2. The system of claim 1, wherein the platform (14a, 14b) further comprises a plurality of rollers (17) adapted to support the sealing tool (106), such that when the platform (14a, 14b) is in the sealing position, the sealing tool (106) is moveable on the rollers (17) so as to provide partial clearance between the sealing tool (106) and the top of the traysealing machine (105).

3. The system of claim 1, wherein the platform (14a, 14b) further comprises an air bed adapted to support the sealing tool (106), such that when the platform (14a, 14b) is in the sealing position, the sealing tool (106) is moveable on the air bed so as to provide partial clearance between the sealing tool (106) and the top of the traysealing machine (105).

4. The system of claim 1, wherein the platform (14a, 14b) further comprises at least one rail (1 a, 1 b) adapted to support the sealing tool (106), such that when the platform (14a, 14b) is in the sealing position, the sealing tool (106) is moveable on the at least one rail (1 a, 1 b) so as to provide partial clearance between the sealing tool (106) and the top of the traysealing machine (105).

5. The system of any of claims 1 to 4, wherein the platform (14a, 14b) is coupled to at least one retractable rail (1 a, 1 b) slideably mounted to the frame (107),
wherein the at least one retractable rail (1 a, 1 b) is operable to move the platform (14a, 14b) between the sealing and maintenance positions, thereby providing substantially full clearance between the sealing tool (106) and the top of the traysealing machine (105) when the platform (14a, 14b) is in the maintenance position, and wherein preferably the at least one retractable rail (1a, 1b) comprises an elongate groove (13) and is mounted to the frame (107) via at least one bearing (12) coupled to said elongate groove (13).

6. The system of any of claims 1 to 5, wherein the platform (14a, 14b) comprises two parallel, laterally spaced elongate members adapted to support the base of the sealing tool (106).

7. The system of any of the preceding claims, wherein the vertical height adjustment member (22a) comprises a second attachment member (24a, 24b) complimentary to said first attachment member (34a, 34b).

8. The system of any of the preceding claims, wherein the second attachment member is at least one peg (24a, 24b), and the first attachment member is at least one complementary hook (34a, 34b), and wherein preferably when the support table (3) is in the attachment position, the at least one hook (34a, 34b) is aligned with, and vertically spaced from, the at least one peg (24a, 24b).

9. The system of any of the preceding claims, wherein the height adjustment member (22a) is slideably mounted to a substantially vertical mast member (22b).

10. The system of any of the preceding claims, wherein the trolley (2) further comprises a top tool turnover unit (4) coupled to the height adjustment member (22a), wherein;
the top tool turnover unit (4) comprises a third attachment member (44a, 44b) operable to engage with a top tool of sealing tool (106), and;
the height adjustment member (22a) is operable to move between a third position and a fourth position, wherein when the height adjustment member (22a) is in the third position, the third attachment means (44a, 44b) engages with the top tool of a sealing tool, and wherein when the height adjustment member (22a) is in the fourth position, the top tool is vertically spaced from the bottom tool of the sealing tool (106) and the first attachment member (34a, 34b) is not engaged with the height adjustment member (22a).

11. The system of claim 10, wherein the third attachment member (44a, 44b) is at least one elongate groove (45a, 45b) operable to receive an attachment feature of a top tool of a sealing tool (106).

12. The system of claim 11, wherein the at least one elongate groove (45a, 45b) is in a plane substantially perpendicular to that of the height adjustment member (22a).

13. The system of any of claims 10 to 12, wherein the top tool turnover unit (4) comprises an axle (41) such that said turnover unit (4) is operable to rotate about an axis perpendicular to that of the height adjustment member (22a).

14. The system of any of claims 10 to 13, wherein the first position and the fourth position are the same position.

15. The system of any of claims 1 to 14, wherein the height adjustment means is operated by any one of: a ball screw and an electric motor; a hydraulic system; an electro-hydraulic system; a pneumatic system; or a manually operated system.

16. The system of any of claims 1 to 15, wherein the height adjustment member (22a) is operable to provide one of indexed movement and continuous motion.

## Patentansprüche

1. System, umfassend ein Werkzeughandhabungssystem (200) zum Transportieren eines Versiegelungswerkzeugs (106), wobei das Werkzeughandhabungssystem (200) Folgendes umfasst:
einen Wagen (2), umfassend ein vertikales Höhenverstellelement (22a), das betätigbar ist, um sich zwischen einer ersten Stellung und einer zweiten Stellung zu bewegen; und
einen Auflagetisch (3) zum Tragen eines Versiegelungswerkzeugs (106), wobei der Auflagetisch (3) ein zu dem vertikalen Höhenverstellelement (22a) komplementäres erstes Befestigungselement (34a, 34b) umfasst,
wobei der Wagen (2) dazu angeordnet ist, den Auflagetisch (3) in einer Befestigungsstellung aufzunehmen, die das erste Befestigungselement (34a, 34b) auf das vertikale Höhenverstellelement (22a) ausrichtet, sodass, wenn das vertikale Höhenverstellelement (22a) von der ersten Stellung in die zweite Stellung bewegt wird, das erste Befestigungselement (34a, 34b) mit dem vertikalen Höhenverstellelement (22a) in Eingriff tritt und der Auflagetisch (3) an dem Wagen befestigt wird und im Gebrauch vom Boden abgehoben wird, und
eine Schalenversiegelungsmaschine (105), wobei die Schalenversiegelungsmaschine (105) Folgendes umfasst:
einen Rahmen (107) und eine zum Tragen des Versiegelungswerkzeugs (106) angeordnete Plattform (14a, 14b), wobei die Plattform (14a, 14b) derart an dem Rahmen (107) angebracht ist, dass die Plattform (14a, 14b) relativ zu dem Rahmen (107) zwischen einer Versiegelungsstellung, in der das Versiegelungswerkzeug (106) betätigbar ist, um Behälter zu versiegeln, und einer Wartungsstellung, die einen Abstand zwischen dem Versiegelungswerkzeug (106) und dem oberen Teil der Schalenversiegelungsmaschine (105) bereitstellt, beweglich ist,
wobei der Auflagetisch (3) dazu angeordnet ist, derart mit der Schalenversiegelungsmaschine (105) zusammenzuwirken, dass im Gebrauch, wenn sich die Plattform (14a, 14b) in der Wartungsstellung befindet, das Versiegelungswerkzeug (106) von der Schalenversiegelungsmaschine (105) zu dem Auflagetisch (3) umgesetzt werden kann, indem das vertikale Höhenverstellelement (22a) von der ersten Stellung in die zweite Stellung bewegt wird, sodass der Auflagetisch (3) vom Boden abgehoben wird, wobei das Versiegelungswerkzeug (106) von der Plattform (14a, 14b) abgehoben und auf den Auflagetisch (3) gehoben wird.

2. System nach Anspruch 1, wobei die Plattform (14a, 14b) weiter eine Vielzahl von Rollen (17) umfasst, die dazu angepasst sind, das Versiegelungswerkzeug (106) zu tragen, sodass, wenn sich die Plattform (14a, 14b) in der Versiegelungsstellung befindet, das Versiegelungswerkzeug (106) auf den Rollen (17) beweglich ist, um einen partiellen Abstand zwischen dem Versiegelungswerkzeug (106) und dem oberen Teil der Schalenversiegelungsmaschine (105) bereitzustellen.

3. System nach Anspruch 1, wobei die Plattform (14a, 14b) weiter ein Luftkissen umfasst, die dazu angepasst sind, das Versiegelungswerkzeug (106) zu tragen, sodass, wenn sich die Plattform (14a, 14b) in der Versiegelungsstellung befindet, das Versiegelungswerkzeug (106) auf dem Luftkissen beweglich ist, um einen partiellen Abstand zwischen dem Versiegelungswerkzeug (106) und dem oberen Teil der Schalenversiegelungsmaschine (105) bereitzustellen.

4. System nach Anspruch 1, wobei die Plattform (14a, 14b) weiter mindestens eine Schiene (1a, 1b) umfasst, die dazu angepasst sind, das Versiegelungswerkzeug (106) zu tragen, sodass, wenn sich die Plattform (14a, 14b) in der Versiegelungsstellung befindet, das Versiegelungswerkzeug (106) auf der mindestens einen Schiene (1a, 1b) beweglich ist, um einen partiellen Abstand zwischen dem Versiegelungswerkzeug (106) und dem oberen Teil der Schalenversiegelungsmaschine (105) bereitzustellen.

5. System nach einem der Ansprüche 1 bis 4, wobei die Plattform (14a, 14b) an mindestens eine einziehbare Schiene (1a, 1b) gekoppelt ist, die gleitfähig an dem Rahmen (107) angebracht ist,
wobei die mindestens eine einziehbare Schiene (1a, 1b) betätigbar ist, um die Plattform (14a, 14b) zwischen der Versiegelungs- und der Wartungsstellung zu bewegen und dadurch ein Wesentlichen einen durchgehenden Abstand zwischen dem Versiegelungswerkzeug (106) und dem oberen Teil der Schalenversiegelungsmaschine (105) bereitstellt, wenn sich die Plattform (14a, 14b) in der Wartungsstellung befindet, und wobei vorzugsweise die mindestens eine einziehbare Schiene (1a, 1b) eine längliche Rille (13) umfasst und über mindestens ein an die längliche Rille (13) gekoppeltes Lager (12) an dem Rahmen (107) angebracht ist.

6. System nach einem der Ansprüche 1 bis 5, wobei die Plattform (14a, 14b) zwei parallele, seitlich beabstandete längliche Elemente umfasst, die dazu angepasst sind, die Basis des Versiegelungswerkzeugs (106) zu tragen.

7. System nach einem der vorangehenden Ansprüche, wobei das vertikale Höhenverstellelement (22a) ein zu dem ersten Befestigungselement (34a, 34b) komplementäres zweites Befestigungselement (24a, 24b) umfasst.

8. System nach einem der vorangehenden Ansprüche, wobei es sich bei dem zweiten Befestigungselement um mindestens einen Zapfen (24a, 24b) handelt und es sich bei dem ersten Befestigungselement um mindestens einen komplementären Haken (34a, 34b) handelt und wobei vorzugsweise, wenn sich der Auflagetisch (3) in der Befestigungsstellung befindet, der mindestens eine Haken (34a, 34b) auf den mindestens einen Zapfen (24a, 24b) ausgerichtet und vertikal davon beabstandet ist.

9. System nach einem der vorangehenden Ansprüche, wobei das Höhenverstellelement (22a) gleitfähig an einem im Wesentlichen vertikalen Mastelement (22b) angebracht ist.

10. System nach einem der vorangehenden Ansprüche, wobei der Wagen (2) weiter eine obere Werkzeugumkehreinheit (4) umfasst, die an das Höhenverstellelement (22a) gekoppelt ist, wobei;
die obere Werkzeugumkehreinheit (4) ein drittes Befestigungselement (44a, 44b) umfasst, das betätigbar ist, um mit einem oberen Werkzeug des Versiegelungswerkzeugs (106) in Eingriff zu treten, und;
das Höhenverstellelement (22a) betätigbar ist, um sich zwischen einer dritten Stellung und einer vierten Stellung zu bewegen, wobei, wenn sich das Höhenverstellelement (22a) in der dritten Stellung befindet, das dritte Befestigungsmittel (44a, 44b) mit dem oberen Werkzeug eines Versiegelungswerkzeugs in Eingriff tritt und wobei, wenn sich das Höhenverstellelement (22a) in der vierten Stellung befindet, das obere Werkzeug vertikal vom unteren Werkzeug des Versiegelungswerkzeugs (106) beabstandet ist und sich das erste Befestigungselement (34a, 34b) nicht mit dem Höhenverstellelement (22a) in Eingriff befindet.

11. System nach Anspruch 10, wobei es sich bei dem dritten Befestigungselement (44a, 44b) um mindestens eine längliche Rille (45a, 45b) handelt, die betätigbar ist, um ein Befestigungsmerkmal eines oberen Werkzeugs eines Versiegelungswerkzeugs (106) aufzunehmen.

12. System nach Anspruch 11, wobei die mindestens eine längliche Rille (45a, 45b) in einer Ebene liegt, die im Wesentlichen senkrecht zu derjenigen des Höhenverstellelements (22a) ist.

13. System nach einem der Ansprüche 10 bis 12, wobei die obere Werkzeugumkehreinheit (4) eine Achse (41) umfasst, sodass die Umkehreinheit (4) betätigbar ist, um sich um eine zur derjenigen des Höhenverstellelements (22a) senkrechte Achse zu drehen.

14. System nach einem der Ansprüche 10 bis 13, wobei es sich bei der ersten Stellung und der vierten Stellung um dieselbe Stellung handelt.

15. System nach einem der Ansprüche 1 bis 14, wobei das Höhenverstellmittel durch eines der Folgenden betätigt wird: eine Kugelumlaufspindel und ein Elektromotor; ein Hydrauliksystem; ein elektrohydraulisches System; ein Pneumatiksystem; oder ein manuell betätigtes System.

16. System nach einem der Ansprüche 1 bis 15, wobei das Höhenverstellelement (22a) betätigbar ist, um indexierte Bewegung oder kontinuierliche Bewegung bereitzustellen.

## Revendications

1. Système comprenant un système de gestion d'outils (200) servant à transporter un outil de scellement (106), Le système de gestion d'outil (200) comportant :
un chariot (2) comprenant un organe d'ajustement de hauteur verticale (22a) qui peut fonctionner de manière à se déplacer entre une première position et une deuxième position ; et
une table de support (3) servant à supporter un outil de scellement (106), ladite table de support (3) comprenant un premier organe de fixation (34a, 34b) complétant ledit organe d'ajustement de hauteur verticale (22a),
dans lequel le chariot (2) est agencé pour recevoir la table de support (3) à une position de fixation qui aligne le premier organe de fixation (34a, 34b) sur l'organe d'ajustement de hauteur verticale (22a), de manière à ce que, quand l'organe d'ajustement de hauteur verticale (22a) est déplacé de la première position à la deuxième position, le premier organe de fixation vienne en prise (34a, 34b) avec l'organe d'ajustement de hauteur verticale (22a) et la table de support (3) se fixe au chariot et, pendant l'utilisation, soit soulevée du sol, et
une machine à sceller des plateaux (105), ladite machine à sceller des plateaux (105) comprenant :
un cadre (107) et une plate-forme (14a, 14b) agencés pour soutenir un outil de scellement (106), dans lequel la plate-forme (14a, 14b) est montée sur le cadre (107) de manière à ce que ladite plate-forme (14a, 14b) puisse être déplacée par rapport au cadre (107) entre une position de scellement où l'outil de scellement (106) peut fonctionner de manière à sceller des conteneurs, et une position de maintenance ménageant un dégagement entre l'outil de scellement (106) et le haut de la machine à sceller des plateaux (105),
dans lequel la table de support (3) est agencée pour coopérer avec la machine à sceller des plateaux (105) de manière à ce que, pendant l'utilisation, quand la plate-forme (14a, 14b) est à la position maintenance, l'outil de scellement (106) puisse être transféré de la machine à sceller des plateaux (105) à la table de support (3) par un mouvement de l'organe d'ajustement de hauteur verticale (22a) de la première position à la deuxième position de manière à ce que la table de support (3) soit soulevée du sol, levant ainsi l'outil de scellement (106) de la plate-forme (14a, 14b) et sur la table de support (3).

2. Système selon la revendication 1, dans lequel la plate-forme (14a, 14b) comprend en outre une pluralité de rouleaux (17) conçus pour supporter l'outil de scellement (106), de manière à ce que, quand la plate-forme (14a, 14b) est à la position de scellement, l'outil de scellement (106) puisse être déplacé sur les rouleaux (17) de manière à ménager un dégagement entre l'outil de scellement (106) et le haut de la machine à sceller des plateaux (105).

3. Système selon la revendication 1, dans lequel la plate-forme (14a, 14b) comprend en outre un lit pneumatique conçu pour supporter l'outil de scellement (106), de manière à ce que, quand la plate-forme (14a, 14b) est à la position de scellement, l'outil de scellement (106) puisse être déplacé sur le lit pneumatique de manière à ménager un dégagement partiel entre l'outil de scellement (106) et le haut de la machine à sceller des plateaux (105).

4. Système selon la revendication 1, dans lequel la plate-forme (14a, 14b) comprend en outre un rail (1a, 1b) conçu pour supporter l'outil de scellement (106), de manière à ce que, quand la plate-forme (14a, 14b) est à la position de scellement, l'outil de scellement (106) puisse être déplacé sur le au moins un rail (1a, 1b) de manière à ménager un dégagement partiel entre l'outil de scellement (106) et le haut de la machine à sceller des plateaux (105).

5. Système selon l'une quelconque des revendications 1 à 4, dans lequel la plate-forme (14a, 14b) est accouplée à au moins un rail rétractable (1a, 1b) monté coulissant au cadre (107),
dans lequel le au moins un rail rétractable (1a, 1b) peut fonctionner de manière à déplacer la plate-forme (14a, 14b) entre les positions scellement et maintenance ce qui ménage un dégagement sensiblement complet entre l'outil de scellement (106) et le haut de la machine à sceller des plateaux (105), quand la plate-forme (14a, 14b) est à la position maintenance, et dans lequel le au moins un rail rétractable (1a, 1b) comprend de préférence une rainure allongée (13) et est monté au cadre (107) par l'intermédiaire d'au moins un roulement (12) accouplé à ladite rainure allongée (13).

6. Système selon l'une quelconque des revendications 1 à 5, dans lequel la plate-forme (14a, 14b) comprend deux organes parallèles allongés espacés latéralement conçus pour supporter la base de l'outil de scellement (106).

7. Système selon l'une quelconque des revendications précédentes, dans lequel l'organe d'ajustement de hauteur verticale (22a) comprend un deuxième organe de fixation (24a, 24b) qui complète ledit premier organe de fixation (34a, 34b).

8. Système selon l'une quelconque des revendications précédentes, dans lequel le deuxième organe de fixation est au moins un piton (24a, 24b), et le premier organe de fixation est au moins un crochet complémentaire (34a, 34b), et dans lequel, de préférence, quand la table de support (3) est à la position fixation, le au moins un crochet (34a, 34b) est aligné sur le au moins un piton (24a, 24b), et espacé verticalement de celui-ci.

9. Système selon l'une quelconque des revendications précédentes, dans lequel l'organe d'ajustement de hauteur (22a) est monté coulissant à un organe de mât sensiblement vertical (22b).

10. Système selon l'une quelconque des revendications précédentes, dans lequel le chariot (2) comprend en outre une unité de retournement d'outil supérieur (4) accouplée à l'organe d'ajustement de hauteur (22a), dans lequel :
l'unité de retournement d'outil supérieur (4) comprend un troisième organe de fixation (44a, 44b) qui peut fonctionner de manière à venir en prise avec un outil supérieur de l'outil de scellement (106), et ;
l'organe d'ajustement de hauteur (22a) peut fonctionner de manière à se déplacer entre une troisième position et une quatrième position, dans lequel, quand l'organe d'ajustement de hauteur verticale (22a) se trouve à la troisième position, le troisième moyen de fixation (44a, 44b) vient en prise avec l'outil supérieur d'un outil de scellement, et dans lequel, quand l'organe d'ajustement de hauteur (22a) se trouve à la quatrième position, l'outil supérieur est espacé verticalement de l'outil inférieur de l'outil de scellement (106) et le premier organe de fixation (34a, 34b) n'est pas en prise avec l'organe d'ajustement de hauteur (22a).

11. Système selon la revendication 10, dans lequel le troisième organe de fixation (44a, 44b) est au moins une rainure allongée (45a, 45b) qui peut fonctionner de manière à recevoir un accessoire de fixation d'un outil supérieur d'un outil de scellement (106).

12. Système selon la revendication 11, dans lequel la au moins une rainure allongée (45a, 45b) se trouve dans un plan sensiblement perpendiculaire à celui de l'organe d'ajustement de hauteur (22a).

13. Système selon l'une quelconque des revendications 10 à 12, dans lequel l'unité de retournement d'outil supérieur (4) comprend un essieu (41) de manière à ce que ladite unité de retournement (4) puisse peut fonctionner de manière à tourner sur un axe perpendiculaire à celui de l'organe d'ajustement de hauteur (22a).

14. Système selon l'une quelconque des revendications 10 à 13, dans lequel la première position et la quatrième position sont la même position.

15. Système selon l'une quelconque des revendications 1 à 14, dans lequel le moyen d'ajustement de hauteur est actionné par l'un quelconque des moyens suivants : une vis à bille et un moteur électrique ; un système hydraulique ; un système électrohydraulique ; un système pneumatique ; ou un système actionné manuellement.

16. Système selon l'une quelconque des revendications 1 à 15, dans lequel l'organe d'ajustement de hauteur verticale (22a) peut fonctionner de manière à assurer un mouvement indexé ou un mouvement continu.
